# EUROPÄISCHE PATENTSCHRIFT

(11) **EP 0 489 198 B1**
(45) Veröffentlichungstag und Bekanntmachung des Hinweises auf die Patenterteilung: **22.06.1994**
(21) Anmeldenummer: 90123442.7
(22) Anmeldetag: 06.12.1990
(51) Int. Cl.: B23K 7/10

(54) **Verfahren zum Entfernen von beim Brennschneiden entstehenden Rückständen und Brenntisch zum Brennschneiden**
Method for removing generated residues, in an autogenous cutting process, and cutting table therefor
Méthode d'enlèvement de résidus produits lors de découpes du chalumeau et table de découpe

(43) Veröffentlichungstag der Anmeldung: 10.06.1992
(73) Patentinhaber: Bliessen, Peter, D-52372 Kreuzau (DE)
(72) Erfinder: Bliessen, Peter, D-52372 Kreuzau (DE)
(74) Vertreter: Mayer-Pohske, Joachim-Wolfgang Rechtsanwälte Dr. Dettmeier & Partner

(56) Entgegenhaltungen:
- DE-U- 8 524 933
- US-A- 4 063 059
- PATENT ABSTRACTS OF JAPAN vol. 13, no. 67 (M-798)(3415) 15 Februar 1989,& JP-A- 63 268566 (AMADA CO LTD) 07 November 1988

## Beschreibung

Die Erfindung bezieht sich auf ein Verfahren zum Entfernen von Rückständen, die beim Brennschneiden metallischer Werkstücke gebildet werden. Die Rückstände werden vom Brennstrahl eines Schneidbrenners erzeugt, der die auf einem Bearbeitungsrost eines Brenntisches aufliegenden zu trennenden Werkstücke durchdringt. Die Erfindung bezieht sich auch auf einen Brenntisch zur Durchführung des Verfahrens.

Beim Brennschneiden muß die Entwicklung von Staub und Gasen, die auch toxische Anteile enthalten können, in Kauf genommen werden. Dies ist bei allen Brennschneidverfahren der Fall, also sowohl beim autogenen Schneidbrennen als auch beim Plasma-Schneidverfahren. Die entstehenden Gase transportieren den entwickelten Staub auch aus dem Brenntisch heraus in die weitere Umgebung. Es ist deshalb schon aus Arbeitsschutzgründen notwendig, die gas- und staubförmigen Rückstände im Bereich ihrer Entstehung zu entfernen.
Bekannt ist es, Staubpartikel und Gase unterhalb des Bearbeitungsrostes abzusaugen. Das Absaugen erfolgt jeweils im Randbereich oder im Boden des Brenntisches. Hieraus ergibt sich jedoch eine sehr ineffektive Absaugung. Denn je nach Entfernung des Schneidbrenners von der Mündung des Absaugkanals muß neben den Staubparktikeln und Brenngasen eine große Menge Fremdluft mit abgesaugt werden, um eine Reinigungswirkung zu erreichen. Zur Verbesserung der Strömungsführung ist der Einsatz von Strömungsleitblechen bekannt.

Ein weiterer Brenntisch mit Absaugung ist bekannt geworden durch das DE-U 85 24 933.5. Bei diesem Brenntisch wird unterhalb des Bearbeitungsrostes ein Absaugwagen verfahren, der mit einer nach oben in Richtung des Brenntisches offenen Öffnung, die sich über die ganze Breite des Brenntisches erstreckt, ausgerüstet ist. Diese Öffnung ist die Öffnung eines trichterförmigen rechteckigen Gebildes, dessen Grund über eine entsprechende seitliche Öffnung ausgekratzt werden kann, so daß gröbere Rückstände entfernt werden können. In einer Seitenwand befindet sich ein sich im wesentlichen über die gesamte Breite erstreckender Absaugschlitz, der von einer Absaugeinrichtung abgesaugt wird.
Der Absaugtrichter bildet eine relativ schmale Kammer, in die Gase des Brennstrahls mit großer Geschwindigkeit eintreten. Sie schießen dabei an der seitlich angeordneten Absaugöffnung im wesentlichen vorbei und bilden innerhalb dieses Absaugwagens starke Wirbel, die von dem einzigen seitlichen Absaugschlitz nur schwer abgesaugt werden können. Durch die Reflektion am Boden schießen daher heiße Gase mit hoher Geschwindigkeit in entgegengesetzter Richtung seitlich wieder aufwärts, ohne vollständig von dem Absaugschlitz erfaßt werden zu können. Sie treten damit unerwünschterweise aus. Ein weiterer Nachteil dieser Einrichtung besteht darin, daß der Absaugwagen immer unter dem Brenner laufen muß. Dies bedeutet, daß er mit dem Brenner und dessen Schnittbewegung hin- und herfahren muß, was einen erhöhten Steuerungsaufwand bedeutet. Sind in Längsrichtung zur gleichzeitigen Bearbeitung mehrere Brenner angeordnet, so müßten auch mehrere solcher Wagen vorgesehen sein, was einen großen Bauaufwand und wiederum einen großen Antriebs- und Steuerungsaufwand erzwingt.

Mit der weiter noch bekannt gewordenen JP-A-63-26 8566 ist die aus dem vorbeschriebenen Stand der Technik bekannte kleine Absaugkammer, die dort als verfahrbarer Wagen ausgebildet war, beibehalten worden. Um alle Bereiche des Tisches absaugen zu können, sind hierbei unter dem Bearbeitungsrost eine Vielzahl solcher Kammern vorgesehen, die allerdings stationär angeordnet sind. Diese Kammern werden einfach dadurch gebildet, daß der freie Raum unterhalb des Bearbeitungsrostes durch entsprechende Zwischenwände unterteilt ist, so daß sich eine Vielzahl einzelner abgesaugter Kammern ergibt. Da nunmehr jede dieser Kammern abgesaugt werden kann und hinsichtlich der Absaugung zu- und abgeschaltet werden kann, ist es nunmehr möglich, über die Länge des Brenntisches verteilt mehrere Brenner gleichzeitig in Tätigkeit zu halten und die entsprechenden Gase abzusaugen. Für die Absaugung weist jede dieser Kammern eine Absaugeinrichtung auf, in die jeweils ein Saugzylinder hineinragt, der auf seiner Oberseite und auf seiner Unterseite Absaugöffnungen aufweist.
Ein Nachteil dieser Einrichtung besteht darin, daß die oberen Absauglöcher des Saugzylinders sehr bald von heißem Brennschrott, der vom austretenden Brennstrahl mitgeführt wird, verschlossen werden und damit unwirksam sind. Darüber hinaus entspricht die Strömungsgeschwindigkeit an den Absaugöffnungen in der Regel nicht der enorm hohen Strömungsgeschwindigkeit des Brennstrahls, so daß ein von oben kommender und auf eine entsprechende Absaugöffnung auf der Oberseite des Absaugzylinders auftreffender Brennstrahl dort, auch dann, wenn diese Öffnung offen ist, nicht abgesaugt werden kann und damit im wesentlichen am Absaugzylinder vorbei in die Absaugkammer hineinströmt, so daß die Öffnungen auf der Oberseite des Absaugzylinders in jedem Fall relativ unwirksam sind. Der nun in die kleingehaltene Absaugkammer - dies ist bei der genannten Literaturstelle ausdrücklich betont - hineinschießende Brennstrahl verwirbelt dort, auch wegen seiner enthaltenen thermischen Energie sehr stark und weist daher aufgrund der Verwirbelung in der Kammer immer noch sehr hohe Strömungsgeschwindigkeiten auf, die in der Regel größer sind als die Absaugströmungsgeschwindigkeit an den Absaugöffnungen. Nur ein kleiner Teil des in der Kammer und am Boden reflektierten Brennstrahles trifft daher auf die an der Unterseite angebrachten Öffnungen im Absaugzylinder und wird dort, soweit die Strömungsgeschwindigkeit bereits entsprechend vermindert ist, abgesaugt. Ein großer Teil des reflektierten Brennstrahles wird wegen der hohen Geschwindigkeit wieder aufwärts am Absaugzylinder vorbei schießen und nach außen austreten. Darüber hinaus wird auch bei intensivem Brennbetrieb und insbesondere dann, wenn in der Breite des Brenntisches mehrere Brenner gleichzeitig arbeiten, ein einzelner Absaugzylinder in einer solchen engen Absaugkammer nicht ausreichen, um die anfallende Gasmenge und Staubmenge aus dem Brennstrahl sicher abzusaugen. Die Absaugleistung eines benachbarten Absaugzylinders aber kann nicht genutzt werden, wegen der vorhandenen Zwischenwände. Darüber hinaus ist aber auch die Entleerung der einzelnen Kammern von gröberem Brennschrott, der sich am Boden solcher Kammern absetzen wird, nur schwer möglich, so daß auch die Wartung einer solchen Einrichtungen schwierig ist. Zwar könnte jede dieser Absaugkammern nach dem Vorbild der vorbeschriebenen Literaturstelle mit einer einzelnen Entleerungsöffnung am Boden versehen sein. Dies macht die Anlage jedoch wieder teurer.

Der Erfindung liegt damit die Aufgabe zugrunde, ein Verfahren der eingangs beschriebenen Art so weiterzuentwickeln, daß unabhängig von der Anzahl der im Betrieb befindlichen Brenner zuverlässig gas- und staubförmige Rückstände unterhalb des Bearbeitungsrostes abgesaugt werden.

Der Erfindung liegt weiter die Aufgabe zugrunde, eine wartungsarme, funktionssichere Vorrichtung zur Durchführung des erfindungsgem. Verfahrens vorzuschlagen.

Verfahrensmäßig ist diese Aufgabe, ausgehend von einem Verfahren der eingangs beschriebenen Art dadurch gelöst, daß der das Werkstück durchdringende Brennstrahl mit seinen gas- und staubförmigen Rückständen in einen mehrere und parallel zueinander angeordnete Absaugkanäle aufweisenden Raum unterhalb des Bearbeitungsrostes geleitet und dort je nach Gasanfall von einem oder mehreren im Bereich des Brennstrahls liegenden Absaugkanälen, die oben spitzdachförmig geschlossen und an der Unterseite geöffnet sind, entgegengesetzt zur Strahlrichtung des Brennstrahls abgesaugt wird. Bei einem solchen Verfahren ist der Raum unterhalb des Bearbeitungsrostes nicht mehr aufgeteilt in viele einzelne Absaugkammern, sondern bildet vielmehr eine einzige Gesamtabsaugkammer. In dieser einen einzigen Gesamtabsaugkammer sind nun mehrere Absaugkanäle eingebracht, die oben geschlossen und unten offen sind.

Dadurch, daß die Kanäle oben geschlossen sind, kann von oben her durch unerwünschten Verschluß von Absaugöffnungen die Funktion nicht mehr negativ beeinträchtigt werden.

Dadurch, daß keine einzelnen durch Zwischenwände abgetrennten Absaugkammern mehr vorhanden sind, kann der Brennstrahl nach unten durchtreten und sich in Reflektion am Boden ungehindert umkehren und seitlich ausbreiten. Hierdurch reduziert sich erheblich dessen Strömungsgeschwindigkeit. Die nach unten offenen Absaugkanäle können nun in gewünschter Zahl benachbart zum Brennstrahl zugeschaltet werden, so daß bedarfsweise mehrere solcher Kanäle gleichzeitig absaugen, wobei immer mindestens zwei solcher Kanäle in Betrieb sind. Diese mindestens zwei Kanäle sollen stets benachbart zum Brennstrahl angeordnet sein, so daß beide Ausdehnungsrichtungen des reflektierten Brennstrahls erfaßt werden. Die infolge der größeren Ausbreitung geringere Geschwindigkeit des Brennstrahls ist für eine sichere Absaugung erheblich besser geeignet. Die Brenngase und Staubpartikel werden somit über kurze Strömungswege unmittelbar dort entnommen, wo sie beim Brennschneiden durch den Brennstrahl beim Durchdringen des Werkstückes entstehen. Sie werden in der Sektion des Brenntisches oder in den Sektionen des Brenntisches abgesaugt, über der oder den sich jeweils ein Schneidbrenner befindet. Da das Absaugen entgegengesetzt zur Brennstrahlrichtung erfolgt, wird für eine Umlenkung der Brenngase und somit für ein Abtrennen gröberer Feststoff-Rückstände vor Eintritt der Brenngase in die Absaugkanäle gesorgt. Der damit unterhalb des Bearbeitungsrostes erzeugte Unterdruck im Bearbeitungsbereich reicht auch aus, heiße, ansonsten nach oben steigende Brenngase nach unten zu ziehen und unterhalb des Bearbeitungsrostes abzusaugen. Soweit in besonderen Fällen sich seitlich ausdehnende Brenngase von den benachbarten Absaugkanälen nicht erfaßt werden können, können weitere Absaugkanäle zugeschaltet werden, so daß ein Austreten der Brenngase mit absoluter Sicherheit vermieden werden kann.

Sich am Boden des Brenntisches ansammelnde Feststoff-Rückstände werden nach Patentanspruch 2 kontinuierlich ausgebracht.

Zur Durchführung des erfindungsgem. Verfahrens wird von einem Brenntisch zum Brennschneiden metallischer Werkstücke ausgegangen, der einen Bearbeitungsrost zum Auflegen der mit einem Schneidbrenner zu trennenden Werkstücke und eine Absaugeinrichtung zum Absaugen gas- und staubförmiger Rückstände aufweist. Gemäß der Erfindung ist der Brenntisch nach Patentanspruch 3 im Raum unterhalb des Bearbeitungsrostes mit mehreren Absaugkanälen ausgestattet, die unterhalb des Bearbeitungsrostes und parallel zur Ebene des Bearbeitungsrostes verlaufen. Die Absaugkanäle sind zum Eintritt der gas- und staubförmigen Rückstände mit über die Länge der Absaugkanäle verteilten Absaugöffnungen versehen. Auf ihrer dem Brennstrahl zugewandten Deckseite sind die Absaugkanäle geschlossen. Um möglichst geringe Materialrückstände auf der geschlossenen Deckfläche der Absaugkanäle zu erzeugen, weisen die Absaugkanäle dachförmige Abdeckungen auf, deren Firste dem Bearbeitungsrost zugewandt sind, wobei die Absaugöffnungen unterhalb der Abdeckungen angeordnet sind. Da die Absaugkanäle bei ihrer Anordnung unterhalb des Bearbeitungsrostes Bodenfreiheit geben, ist es möglich, für den auf den Boden des Brenntisches unterhalb des Bearbeitungsrostes fallenden Feststoff-Rückstand einen Austragförderer vorzusehen, Patentanspruch 4. Mit dem Austragförderer lassen sich vom Boden nicht nur Abbrandabfälle, sondern auch auf den Boden ausgebrachte, fertig gebrannte Werkstücke abtransportieren.

Bevorzugt verlaufen schlitzförmige Ansaugöffnungen unterhalb eines Dachrandes der Abdeckung. Außerdem sind die Eintrittsquerschnitte der Ansaugöffnungen dem Druckabfall im Absaugkanal entsprechend angepaßt.

Damit die Absaugung effektiv und unmittelbar auf die Umgebung des Brennstrahls begrenzt werden kann, sind die Absaugkanäle mit Reglern ausgerüstet, die je nach Absaugnotwendigkeit geöffnet werden können. Nicht benötigte Absaugkanäle bleiben geschlossen. Im einfachsten Falle werden verstellbare Verschlußklappen als Regler verwendet.

Die Erfindung und weitere Ausbildungen der Erfindung werden nachfolgend anhand eines in der Zeichnung schematisch wiedergegebenen Ausführungsbeispiels näher erläutert. Die Zeichnung zeigt im einzelnen:
- Fig. 1: Brenntisch im Längsschnitt gemäß nach Fig. 2.
- Fig. 2: Brenntisch nach Fig. 1 im Querschnitt gemäß nach Fig. 1.
- Fig. 3: perspektivische Darstellung eines Absaugkanals

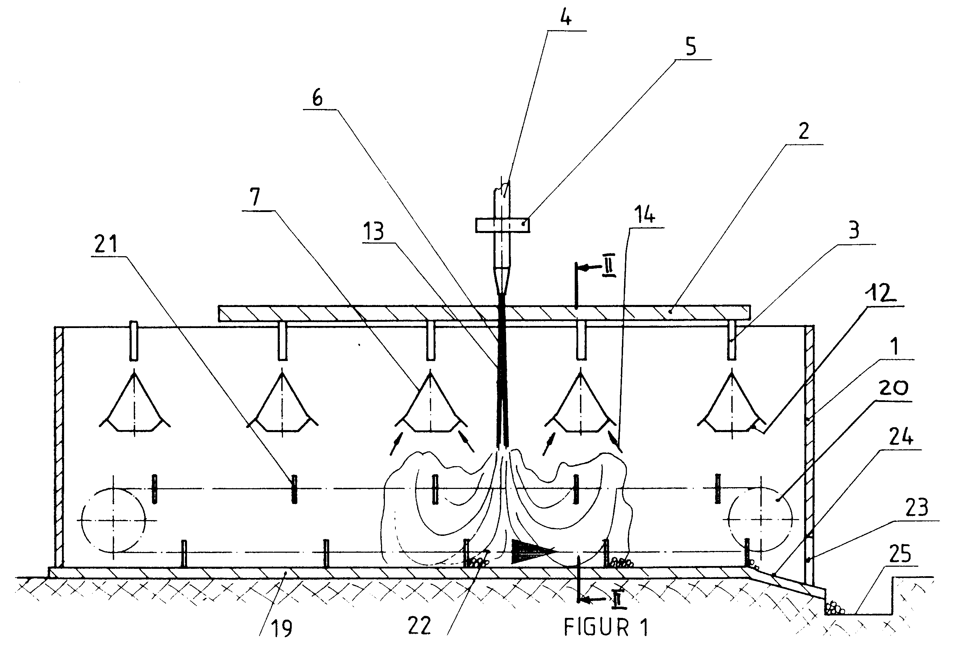

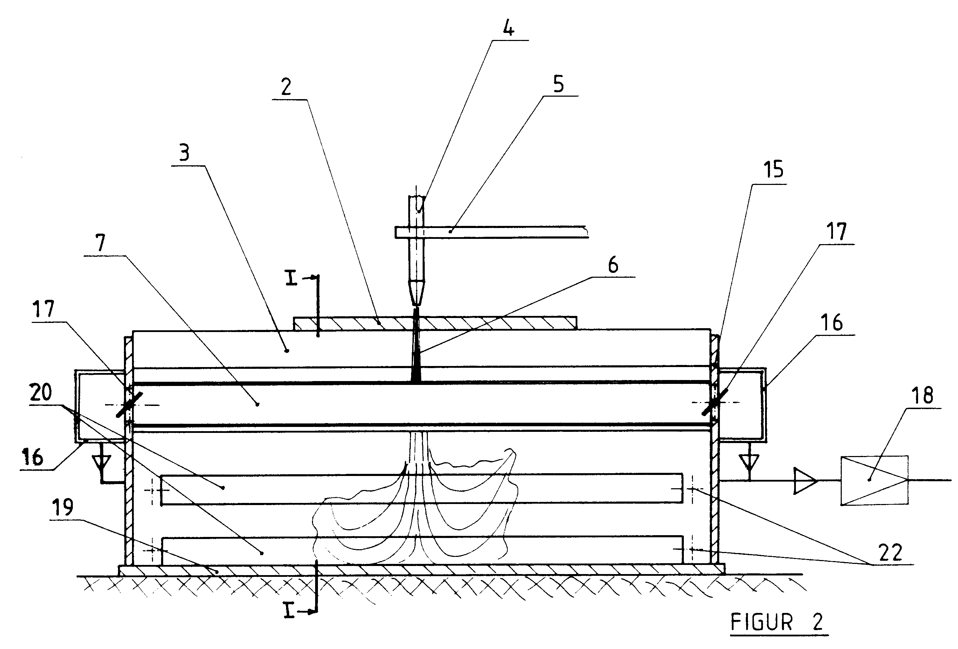

In Fig. 1 und 2 ist ein Brenntisch (1) einer Brennschneidmaschine dargestellt. Das zu schneidende Werkstück (2) liegt auf einem Bearbeitungsrost (3) auf. Ein Schneidbrenner (4), der an einer bewegbaren Halterung (5) befestigt ist, ist in Betriebsstellung skizziert, ein Brennstrahl (6) durchdringt das zu trennende Werkstück (2). In geringem Abstand unterhalb des Bearbeitungsrostes (3) befinden sich Absaugkanäle (7) zum Absaugen der beim Brennschneiden entstehenden gas- und staubförmigen Rückstände.

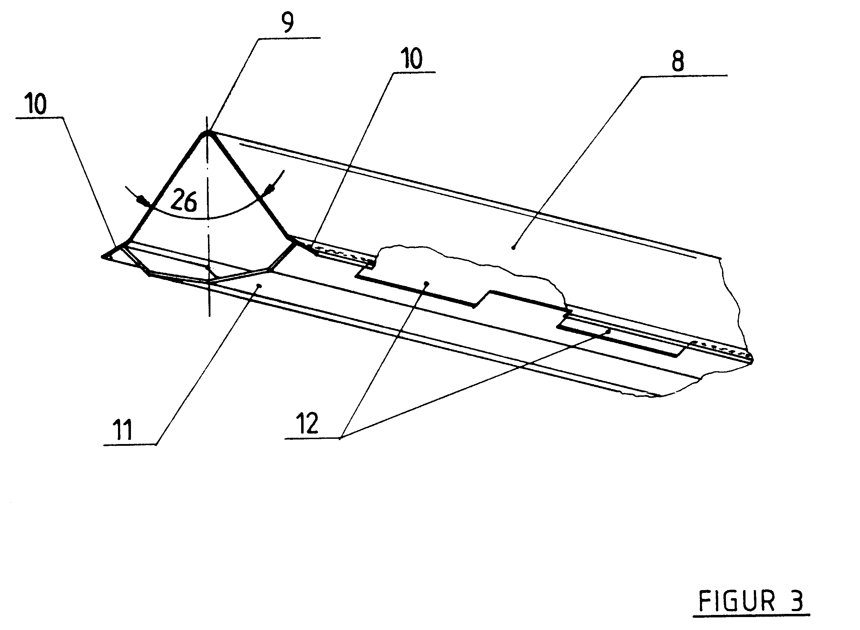

Die Absaugkanäle (7) verlaufen parallel zur Ebene des Bearbeitungsrostes (3) und sind prismenförmig ausgebildet (siehe auch Fig. 3), wobei als Deckfläche eine geschlossene dachförmige Abdeckung (8) mit ihrem First (9) der unteren Seite des Bearbeitungsrostes (3) zugewandt ist. Unterhalb von Dachrändern (10) befinden sich in einem die Absaugkanäle (7) nach unten abschließenden Kanalboden (11) Ansaugöffnungen (12) für die gas- und staubförmigen Rückstände. Die Rückstände treten durch die Ansaugöffnungen hindurch in die Absaugkanäle ein. Die Ansaugöffnungen sind im Ausführungsbeispiel schlitzförmig ausgeführt und verlaufen unterhalb und parallel zu beiden Dachrändern (10). Jeder Dachrand überdeckt die Ansaugöffnungen (12), so daß die gas- und staubförmigen Rückstände von unten in die Ansaugkanäle einströmen, die angesaugten Rückstände werden also vor ihrem Eintritt umgelenkt und treten entgengesetzt zur Brennstrahlrichtung (13) in die Absaugkanäle (7). Strömungspfeile (14) für die gas- und staubförmigen Rückstände sind in Fig. 1 schematisch eingezeichnet.

Die Ansaugöffnungen (12) können abweichend vom Ausführungsbeispiel auch über den Kanalboden (11) verteilt angeordnet sein, so daß die Rückstände nicht nur im Randbereich unterhalb der Dachränder (10), sondern auch in anderen Bereichen des Kanalbodens in die Absaugkanäle eintreten. Die Anordnung und Ausbildung der Ansaugöffnungen richtet sich in erster Linie nach dem gewünschten Absauggrad, insbesondere wird der Druckverlauf im Absaugkanal durch entsprechende Bemessung des freien Durchtrittquerschnittes der Ansaugöffnungen (12) beeinflußt. So sind im Ausführungsbeispiel die Durchtrittsquerschnitte wegen des Druckabfalles im Absaugkanal zur Mitte des Brenntisches (1) hin größer bemessen als die Durchtrittsguerschnitte der Ansaugöffnungen (12) im Bereich des Anschlusses der Absaugkanäle am Schneidtischrand, der durch Abdeckwände (15) abgeschlossen ist. Außerhalb der Abdeckwände (15) verlaufen Sammelkanäle (16), in die Absaugkanäle (7) münden. Im Ausführungsbeispiel sind Sammelkanäle (16) beidseitig am Brenntisch angebracht. Selbstverständlich ist es je nach erzeugbarem Unterdruck in den Absaugkanälen (7) auch möglich, nur an einer der Abdeckwände einen Sammelkanal anzuordnen.

An den Mündungsstellen der Absaugkanäle (7) sind als Regler verstellbare Verschlußklappen (17) eingesetzt. In Fig. 2 sind die Verschlußklappen (17) für den Betrieb der Absaugkanäle in geöffneter Stellung dargestellt. Werden die Absaugkanäle zum Ansaugen nicht benötigt, werden die Verschlußklappen (17) geschlossen. Der Einsatz der Absaugkanäle läßt sich so den jeweiligen betrieblichen Bedürfnissen, jeweils in Abhängigkeit von der Arbeitsstellung des Schneidbrenners, entsprechend optimal anpassen. Die gas- und staubförmigen Rückstände werden nur im Bereich des Brennstrahls unterhalb des Bearbeitungsrostes (3), also unmittelbar im Bereich ihrer Entstehung entfernt. Die in Fig. 1 dem Brennstrahl (6) benachbarten Absaugkanäle (7) sind zum Ansaugen geöffnet, bei den außenliegenden Absaugkanälen (7) sind die Verschlußklappen (17) geschlossen.
Der Ansaugbereich wird je nach anfallender Menge und je nach Ausbreitungsverhalten der gas- und staubförmigen Rückstände eingestellt.
Die gas- und staubförmigen Rückstände werden durch die Sammelkanäle (16) von Ventilatoren (18) abgesaugt. Zur Zurückhaltung der staubförmigen Rückstandsteile gegebenenfalls notwendige Filter am Ende der Sammelkanäle (16) sind in der Zeichnung nicht wiedergegeben.

Die Absaugkanäle (7) sind derart unterhalb des Bearbeitungsrostes (3) angeordnet, daß zwischen den Absaugkanälen und Boden (19) des Brenntisches ein freier Raum bleibt. Es lassen sich so am Boden (19) des Brenntisches sammelnde Feststoff-Rückstände vom Brennschneiden der Werkstücke ohne weiteres ausräumen. Im Ausführungsbeispiel ist ein Austragförderer (20) vorgesehen, der Kratzer (21) aufweist, die von angetriebenen Ketten (22) über den Boden (19) gezogen werden und auf diese Weise die Feststoff-Rückstände, einschließlich gegebenenfalls auf den Boden ausgebrachten fertig geschnittener Werkstücke austragen. Die Feststoff-Rückstände rutschen im Ausführungsbeispiel am Ende des Bodens (19) durch eine Bodenöffnung (23 hindurch und über eine Rinne (24) in einen Rückstandsbehälter (25).

Im Ausführungsbeispiel befinden sich die Firste (9) der dachförmigen Abdeckungen (8) in einem solchen Abstand unterhalb der unteren Ebene des Bearbeituntgsrostes (3), daß sie vom Brennstrahl nicht beschädigt werden. Die Abdeckungen bestehen aus Stahlblech. Auf der Abdeckung bilden sich jedoch Schlackenrückstände, die je nach Dachwinkel (26) unterschiedlich auf der Abdeckung haften bleiben.

Die wenigsten Schlackenrückstände auf der Abdeckung werden bei einem Dachwinkel zwischen 60 und 80 Grad festgestellt. Ob sich Ablagerungen bilden, hängt auch von der Oberflächenbeschaffenheit der Abdeckung ab. Statt Abdeckungen aus Stahlblech kommen auch keramische oder keramisch beschichtete Werkstoffe in Betracht.

Die Absaugwirkung ist auch durch die Formgestaltung der beiden Dachränder (10) beeinflußbar. Im Ausführungsbeispiel sind die Dachränder (10) gegenüber dem Dachwinkel (26) der Abdeckung (8) abgeflacht und weisen zur Horizontalen einen geringeren Neigungswinkel auf. Hierdurch ergibt sich eine Abrißkante für die Strömung der gas- und staubförmigen Rückstände und eine Verstärkung der gewünschten Strömungsumlenkung vor Eintritt in die Absaugkanäle (7).

Mit der im Ausführungsbeispiel wiedergegebenen Absaugeinrichtung konnte eine sehr hohe Reinhaltung der Umgebung des Brenntisches erreicht werden. Vorteilhaft ist auch, daß das Verbacken der Feststoff-Rückstände durch kontinuierliches oder quasi kontinuierliches austragen der Rückstände weitgehend vermieden wird. Auch vom Brennstrahl fertig geschnittene Werkstücke, die auf den Boden des Brenntisches fallen, werden vom Kratzer in den Rückstandsbehälter transportiert und lassen sich daraus entnehmen.

## Patentansprüche

1. Verfahren zum Entfernen von beim Brennscheiden metallischer Werkstücke (2) gebildeter Rückstände, die vom Brennstrahl (6) eines Schneidbrenners (4) beim Durchdringen eines auf einem Bearbeitungsrost (3) eines Brenntisches (1) aufliegenden Werkstückes (2) erzeugt und unterhalb des Bearbeitungsrostes (3) entfernt werden, wobei gas- und staubförmige Rückstände von unterhalb und parallel zur Ebene des Bearbeitungsrostes verlaufenden Absaugkanälen (7) abgesaugt werden, dadurch gekennzeichnet, daß der das Werkstück (2) durchdringende Brennstrahl (6) mit seinen gas- und staubförmigen Rückständen in einen mehrere parallel zueinander angeordnete Absaugkanäle (7) aufweisenden Raum unterhalb des Bearbeitungsrostes (3) geleitet und dort je nach Gasanfall von einem oder mehreren im Bereich des Brennstrahls (6) liegenden Absaugkanälen (7), die oben spitzdachförmig geschlossen und an der Unterseite geöffnet sind, entgegengesetzt zur Strahlrichtung des Brennstrahls (6) abgesaugt wird.

2. Verfahren nach Anspruch 1, dadurch gekennzeichnet, daß sich am Boden der Schneidmaschine unterhalb der Absaugkanäle sammelnde Feststoffrückstände vom Boden kontinuierlich ausgebracht werden.

3. Brenntisch zum Brennschneiden metallischer Werkstücke (2) mit einem Bearbeitungsrost (3) zum Auflegen der mit einem Schneidbrenner (4) zu trennenden Werkstücke (2) und mit einer Absaugeinrichtung zum Absaugen von beim Brennen entstehender Rückstände, zur Durchführung des Verfahrens nach Patentanspruch 1, dadurch gekennzeichnet, daß im Raum unterhalb des Bearbeitungsrostes (3) mehrere Absaugkanäle (79) parallel zur Ebene des Bearbeitungsrostes (3) verlaufen, daß die Absaugkanäle (7) über ihre Länge verteilte Ansaugöffnungen (12) zum Eintritt von gas- und staubförmigen Rückständen aufweisen wobei ihre dem Bearbeitungsrost (3) zugewandten Deckflächen (8) als Spitzdach ausgebildet und geschlossen sind.

4. Brenntisch nach Anspruch 3, dadurch gekennzeichnet, daß am Boden (19) des Brenntisches unterhalb der Absaugkanäle (7) ein Austragsförderer (20) für sich am Boden absetzender Feststoff-Rückstände vorgesehen ist.

5. Brenntisch nach Anspruch 3, dadurch gekennzeichnet, daß die Absaugöffnungen (12) am Dachrand (19) verlaufende Schlitze bilden.

6. Brenntisch nach einem der vorhergehenden Ansprüche 3 bis 5, dadurch gekennzeichnet, daß die Ansaugöffnungen (12) freie Eintrittsquerschnitte aufweisen, die dem beim Absaugen sich einstellenden Druckabfall im Absaugkanal angepaßt sind.

7. Brenntisch nach einem der vorhergehenden Ansprüche 3 bis 6, dadurch gekennzeichnet, daß die Absaugkanäle mit Reglern (17) zum Einstellen des Absaugbetriebes ausgerüstet sind.

8. Brenntisch nach Anspruch 7, dadurch gekennzeichnet, daß als Regler eine verstellbare Verschlußklappe (17) dient.

9. Brenntisch nach einem der vorhergehenden Ansprüche 3 bis 8, dadurch gekennzeichnet, daß der Austragsförderer (20) für die Feststoffrückstände ein die Rückstände zu einer Bodenöffnung (23) befördernder Kratzer ist.

## Claims

1. Method for the removal of products of combustion formed in the flame cutting of metallic workpieces (2), which products are produced by the flame jet (6) of a cutting torch (4) in the cutting through of a workpiece (2) resting on a working grid (3) of a flame-cutting table (1) and are removed from below the working grid (3), wherein gaseous and particulate products of combustion are sucked away by suction channels (7) extending below and parallel to the plane of the working grid, characterised in that the flame jet (6) penetrating the workpiece (2) is conducted with its gaseous and particulate products of combustion into a chamber below the working grid (3) which has a plurality of suction channels (7) arranged parallel to each other, and there, depending upon gas yield, is sucked away in a direction opposite to the direction of the flame jet (6) by one or more suction channels (7) which are in the region of the flame jet (6), said suction channels being closed at the top shaped like a roof ridge and being open at the underside.

2. Method according to claim 1, characterised in that at the base of the cutting machine, below the suction channels, solid products of combustion collecting there are continuously removed from the base of the machine.

3. Flame-cutting table for the flame cutting of metallic workpieces (2), comprising a working grid (3) for supporting the workpieces (2) to be cut by a cutting torch (4), and a suction device for sucking away products of combustion arising during the cutting process, for carrying out the method according to claim 1, characterised in that a plurality of suction channels (7) extend parallel to the plane of the working grid (3) in the space below the working grid (3), that the suction channels (7) have suction holes (12) distributed over their length for the entry of gaseous and particulate products of combustion, and wherein the walls (8) of the channels facing the working grid (3) are formed like a roof ridge and are closed.

4. Flame-cutting table according to claim 3, characterised in that at the bottom (19) of the flame-cutting table below the suction channels (7) there is provided an output conveyor (20) for solid products of combustion lying on the bottom.

5. Flame-cutting table according to claim 3, characterised in that the suction holes (12) constitute slots extending to the roof edges (10).

6. Flame-cutting table according to one of the preceding claims 3 to 5, characterised in that the suction holes (12) have free entry cross-sections which are matched to the pressure drop in the suction channel which is created when suction is applied.

7. Flame-cutting table according to one of the preceding claims 3 to 6, characterised in that the suction channels are provided with regulators (17) for adjusting the suction operation.

8. Flame-cutting table according to claim 7, characterised in that an adjustable closure flap (17) serves as regulator.

9. Flame-cutting table according to one of the preceding claims 3 to 8, characterised in that the output conveyor (20) for the solid products of combustion is a scraper delivering the products of combustion to a bottom aperture (23).

## Revendications

1. Procédé pour éliminer les résidus formés lors de l'oxycoupage de pièces métalliques (2), qui sont produits par le jet (6) d'un chalumeau coupeur (4) lorsque ledit jet traverse une pièce (2) posée sur une grille d'usinage (3) d'une table d'oxycoupage (1) et qui sont éliminés au-dessous de la grille d'usinage (3), les résidus gazeux et pulvérulents étant aspirés par des canaux d'aspiration (7) s'étendant au-dessous de la grille d'usinage et parallèlement au plan de celle-ci, caractérisé en ce que le jet (6) traversant la pièce (2) est amené, avec ses résidus gazeux et pulvérulents, dans un espace situé au-dessous de la grille d'usinage (3) et comportant plusieurs canaux d'aspiration (7) disposés parallèlement les uns par rapport aux autres et là, est aspiré dans le sens inverse du sens du jet (6), suivant la production de gaz, par un ou plusieurs canaux d'aspiration (7) qui sont situés dans la zone du jet (6) et qui sont fermés en forme de toit pointu, en haut, et ouverts au niveau du côté inférieur.

2. Procédé selon la revendication 1, caractérisé en ce que les résidus solides s'accumulant au fond de la machine de découpage, au-dessous des canaux d'aspiration, sont évacués du fond en continu.

3. Table pour l'oxycoupage de pièces métalliques (2), comportant une grille d'usinage (3) sur laquelle doivent être posées les pièces (2) à séparer à l'aide d'un chalumeau coupeur (4), et un dispositif d'aspiration destiné à aspirer les résidus formés lors de la combustion, pour la mise en oeuvre du procédé selon la revendication 1, caractérisée en ce que plusieurs canaux d'aspiration (79) s'étendent parallèlement au plan de la grille d'usinage (3), dans l'espace situé au-dessous de celle-ci, et en ce que les canaux d'aspiration (7) présentent des ouvertures d'aspiration (12) réparties sur leur longueur et destinées à l'entrée de résidus gazeux et pulvérulents, leurs surfaces de recouvrement (8) tournées vers la grille d'usinage (3) ayant la forme d'un toit pointu et étant fermées.

4. Table d'oxycoupage selon la revendication 3, caractérisée en ce qu'il est prévu, au fond (19) de la table, au-dessous des canaux d'aspiration (7), un convoyeur d'évacuation (20) pour les résidus solides qui se déposent au fond.

5. Table d'oxycoupage selon la revendication 3, caractérisée en ce que les ouvertures d'aspiration (12) forment des fentes s'étendant au niveau du bord (9) du toit pointu.

6. Table d'oxycoupage selon l'une des revendications 3 à 5 précédentes, caractérisée en ce que les ouvertures d'aspiration (12) présentent des sections transversales d'entrée libres qui sont adaptées à la baisse de tension qui apparaît dans le canal d'aspiration lors de l'aspiration.

7. Table d'oxycoupage selon l'une des revendications 3 à 6 précédentes, caractérisée en ce que les canaux d'aspiration sont équipés d'éléments régulateurs (17) pour le réglage du fonctionnement d'aspiration.

8. Table d'oxycoupage selon la revendication 7, caractérisée en ce qu'un clapet réglable (17) sert d'élément régulateur.

9. Table d'oxycoupage selon l'une des revendications 3 à 8 précédentes, caractérisée en ce que le convoyeur d'évacuation (20) prévu pour les résidus solides consiste en un racloir transportant les résidus vers une ouverture (23) du fond.
